# EUROPÄISCHE PATENTSCHRIFT

(11) **EP 0 390 737 B1**
(45) Veröffentlichungstag und Bekanntmachung des Hinweises auf die Patenterteilung: **23.02.1994**
(21) Anmeldenummer: 90810216.3
(22) Anmeldetag: 19.03.1990
(51) Int. Cl.: C09C 3/08, C09C 3/06, C09C 1/30, C08K 9/02, C08K 9/04

(54) **Füllstoffbeschichtung**
Filler coating
Revêtement pour matière de remplissage

(30) Priorität: 29.03.1989 DE 3910105
(43) Veröffentlichungstag der Anmeldung: 03.10.1990
(73) Patentinhaber: HILTI Aktiengesellschaft, 9494 Schaan (LI)
(72) Erfinder: Gross, Ioan, D-8900 Augsburg 22 (DE); Irmscher, Hans-Jürgen, D-8910 Landsberg (DE)
(74) Vertreter: Wildi, Roland

(56) Entgegenhaltungen:
- FR-A- 2 102 270
- FR-A- 2 615 195

## Beschreibung

Die Erfindung betrifft als Füllstoffe dienende Quarzkörner eines härtbaren Zweikomponenten-Systems, mit Benzoylperoxid-Beschichtung und einem die Beschichtung umgebenden Ueberzug.

Zweikomponenten-Systeme bestehen aus einer Harzkomponente und einer Härterkomponente, die bis zur Anwendung voneinander getrennt gehalten werden. Wenigstens eine der Komponenten enthält einen Füllstoff. Eine bevorzugte Ausführungsform besteht darin, den Füllstoff in Form von Quarzkörnern vorzusehen und dabei mit der Härterkomponente zu beschichten.

Nach einem bekannten Verfahren erfolgt eine Beschichtung von Quarzkörnern dadurch, dass granuliertes Polystyrol in Toluol gelöst und anschliessend Benzoylperoxid sowie die Quarzkörner zugewogen werden. Durch anschliessendes Umrühren und Einblasen von Luft wird das Toluol verdampft. Die Quarzkörner werden dadurch mit einer in Polystyrol eingebetteten Peroxidschicht gecoatet. Dieses bekannte Verfahren ist relativ zeitaufwendig, indem je nach Mischergrösse ein bis zwei Stunden erforderlich sind. Ein weiterer Nachteil besteht darin, dass das während des Coatens freiwerdende Toluol abgesaugt und nachverbrannt werden muss.

Der Erfindung liegt die Aufgabe zugrunde, eine zu einem vereinfachten Herstellverfahren führende Beschichtung von Quarzkörnern mit Benzoylperoxid zu schaffen.

Gemäss Erfindung wird dies dadurch erreicht, dass der Ueberzug pyrogene Kieselsäure enthält.

Die erfindungsgemässe Beschichtung hat den Vorteil, dass auf das Lösungsmittel Toluol verzichtet werden kann. Die Herstellung ist im Vergleich zum bekannten Verfahren wesentlich umweltfreundlicher, und ausserdem wird die Rieselfähigkeit der Quarzkörner aufrecht erhalten.

Das Verfahren zur Herstellung der erfindungsgemäss beschichteten Quarzkörner besteht darin, dass die Quarzkörner in flüssiges oder pastöses Benzoylperoxid eingetaucht und gemischt werden und vor Abschluss des Mischvorganges pyrogene Kieselsäure zugegeben wird.

Der Mischvorgang für die Herstellung einer Charge dauert vorzugsweise etwa 10 bis 20 Minuten. Gegenüber dem bekannten, ein bis zwei Stunden dauernden Verfahren kann somit erheblich Zeit eingespart werden. Dies wirkt sich neben der Einsparung des Lösungsmittels Toluol weiterhin wirtschaftlich auf die Herstellungskosten aus.

Der Anteil der pyrogenen Kieselsäure bezogen auf die Gesamtmasse beträgt zweckmässigerweise höchstens fünf Gewichtsprozent. Der Anteil der pyrogenen Kieselsäure, und damit auch die Kosten, sind also sehr gering. Ein wesentlicher Vorteil besteht auch darin, dass ohne Lösungsmittel gearbeitet wird und daher auch keine umweltschädigenden Dämpfe freigesetzt werden.

Die Erfindung soll nachstehend, anhand der sie beispielsweise wiedergebenden Zeichnungen, näher erläutert werden. Es zeigen:
- Fig. 1: ein unbeschichtetes Quarzkorn;
- Fig. 2: ein Quarzkorn mit einer Benzoylperoxid-Beschichtung,
- Fig. 3: ein Quarzkorn mit einer Benzoylperoxid-Beschichtung, deren Oberfläche durch Zugabe pyrogener Kieselsäure abgeschlossen ist.

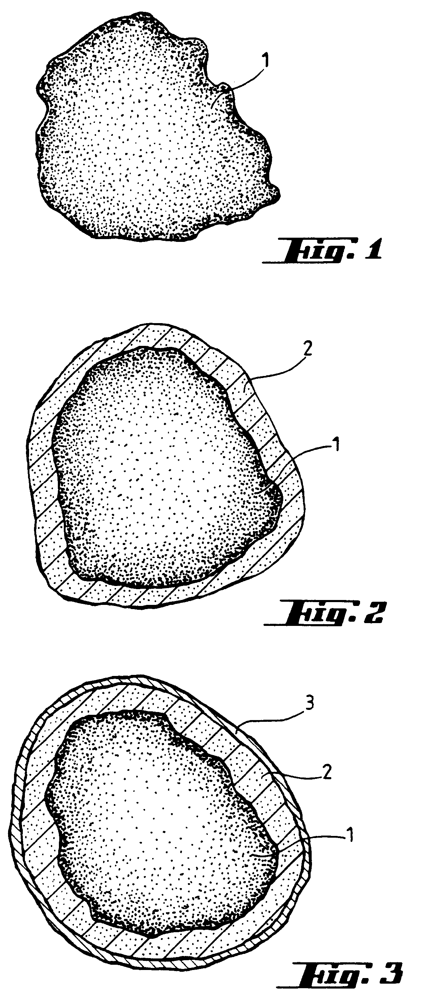

Fig. 1 zeigt ein einzelnes Quarzkorn 1 ohne jegliche Beschichtung.

Fig. 2 zeigt ein Quarzkorn 1, das durch Eintauchen in flüssiges oder pastöses Benzoylperoxid mit einer Beschichtung 2 versehen ist. Die Benzoylperoxid-Beschichtung 2 dient als Härterkomponente in Verbindung mit einer Harzkomponente eines Zweikomponenten-Systems.

Fig. 3 zeigt ein Quarzkorn 1 mit einer Benzoylperoxid-Beschichtung 2, deren Oberfläche durch Zugabe pyrogener Kieselsäure mit einem Ueberzug 3 versehen ist. Dieser Ueberzug 3 verhindert ein Kleben der einzelner Quarzkörner 1 aneinander und ermöglicht somit die Rieselfähigkeit eines Gemenges von Quarzkörnern 1.

## Patentansprüche

1. Als Füllstoffe dienende Quarzkörner (1) eines härtbaren Zweikomponenten-Systems, mit Benzoylperoxid-Beschichtung (2) und einem die Beschichtung umgebenden Ueberzug (3), **dadurch gekennzeichnet**, dass der Ueberzug (3) pyrogene Kieselsäure enthält.

2. Verfahren zur Herstellung von Quarzkörnern nach Anspruch 1, dadurch gekennzeichnet, dass die Quarzkörner in flüssiges oder pastöses Benzoylperoxid eingetaucht und gemischt werden und vor Abschluss des Mischvorganges pyrogene Kieselsäure zugegeben wird.

3. Verfahren nach Anspruch 2, dadurch gekennzeichnet, dass der Mischvorgang 10 bis 20 Minuten dauert.

4. Verfahren nach Anspruch 2 oder 3, dadurch gekennzeichnet, dass der Anteil der pyrogenen Kieselsäure bezogen auf die Gesamtmasse höchstens 5 Gewichts-Prozent beträgt.

## Claims

1. Quartz grains (1) of a hardening two-component system serving as fillers, with a benzoyl peroxide coating (2) and a covering (3) which surrounds the coating, **characterised in that** the covering (3) contains pyrogen silicic acid.

2. Process for the manufacture of quartz grains according to claim 1, **characterised in that** the quartz grains are immersed into liquid or paste-like benzoyl peroxide and mixed, and that pyrogen silicic acid is added prior to completion of the mixing process.

3. Process according to claim 2, **characterised in that** the mixing process takes between 10 and 20 minutes.

4. Process according to claim 2 or 3, **characterised in that** the proportion of pyrogen silicic acid is maximum 5 per cent by weight relative to the total mass.

## Revendications

1. Grains de quartz (1) d'un système durcissable à deux constituants servant de matières de remplissage, comprenant un enrobage de peroxyde de benzoyle (2) et un revêtement (3) enveloppant l'enrobage, caractérisés en ce que le revêtement (3) contient de l'acide silicique pyrogène.

2. Procédé de fabrication de grains de quartz selon la revendication 1, caractérisé en ce que les grains de quartz sont plongés et mélangé dans du peroxyde de benzoyle liquide ou pâteux et que de l'acide silicique pyrogéné est ajouté avant la fin du processus de mélange.

3. Procédé selon la revendication 2, caractérisé en ce que le processus de mélange dure de 10 à 20 minutes.

4. Procédé selon l'une des revendications 2 ou 3, caractérisé en ce que la proportion d'acide silicique pyrogéné rapportée à la masse totale est au maximum de 5 % en poids.
